# EUROPÄISCHE PATENTSCHRIFT

(11) **EP 0 763 438 B1**
(45) Veröffentlichungstag und Bekanntmachung des Hinweises auf die Patenterteilung: **10.01.2001**
(21) Anmeldenummer: 96112104.3
(22) Anmeldetag: 26.07.1996
(51) Int. Cl.: B60G 11/08, F16F 1/368

(54) **Radaufhängung für ein Kraftfahrzeug mit einer radführenden Blattfeder**
Wheel suspension for a motor vehicle with a wheel guiding leaf spring
Suspension de roue d'un véhicule automobile avec un ressort à lame guidant la roue

(30) Priorität: 13.09.1995 DE 19533803
(43) Veröffentlichungstag der Anmeldung: 19.03.1997
(73) Patentinhaber: Dr.Ing.h.c. F. Porsche Aktiengesellschaft, 70435 Stuttgart (DE)
(72) Erfinder: Baumann, Hans-Uwe, 70437 Stuttgart (DE)

(56) Entgegenhaltungen:
- EP-A- 0 137 096
- WO-A-87/01339
- DE-A- 3 415 125
- US-A- 1 810 319
- US-A- 2 697 613
- US-A- 3 149 855
- US-A- 4 598 900

## Beschreibung

Die Erfindung bezieht sich auf eine Radaufhängung für ein Kraftfahrzeug mit einer radführenden und quer zum Fahrzeug angeordneten Blattfeder.

Aus der US-PS 2,697,613 ist eine Blattfeder für eine Radaufhängung eines Kraftfahrzeuges bekannt, welche beidseitig einer Fahrzeuglängsmittenebene in aufbauseitigen Lagerungen eingespannt gehalten ist. Die freien Federenden sind in einem Radträger angelenkt und aufbauseitige Lagerungen der Blattfeder umfassen zwischen Lagerschalen angeordnete elastische Elemente, die unmittelbar an der Blattfeder anliegen.

Aus der US 3,149,855 (= DE 11 46 380 B1) ist bereits eine federnde Aufhängung der gelenkten Vorderräder von Kraftfahrzeugen bekannt geworden, bei der eine radführende und quer zum Fahrzeug angeordnete Blattfeder am Fahrzeugaufbau gelagert und mit ihren freien Enden am Radträger angelenkt ist. Die Blattfeder ist beidseitig einer Fahrzeuglängsmittenebene zwischen zwei quer zur Blattfeder liegende Spannelementen gehalten, welche über gegenüberstehende elastische Aufnahmen in umgebenden Lagerschalen angeordnet sind. Dabei sind die obenseitig der Blattfeder angeordneten ersten Lagerschalen an einem Querträger angeordnet und weisen aufgerundete Lagerungen für die in den elastischen Aufnahmen gebetteten Spannelemente auf. Unterseitig der Blattfeder angeordnete Lagerschalen bestehen jeweils aus einem länglichen, das halbzylindrische Spannelement aufnehmenden Teil, das über Schrauben mit ersten Lagerschalen verbindbar ist.

Ferner ist aus der WO 87/01339 A1 eine Radaufhängung für Fahrzeuge bekannt geworden, bei der eine Blattfeder beidseitig einer Fahrzeuglängsmittenebene an zwei Punkten gelagert ist. Hierzu sind an einem die Blattfeder umfassenden zweischaligen Gehäuse elastische Vorsprünge vorgesehen, zwischen denen die Blattfeder eingespannt ist. Innerhalb des Gehäuses sind, ebenfalls aus elastischem Material, weitere Vorsprünge vorgesehen, die als Anschlag für eine Durchbiege-Bewegung der Blattfeder dienen. Das Gehäuse ist mit einem Getriebegehäuse verbunden.

Aus der DE 34 15 125 A1 ist es bekannt geworden, eine Blattfeder aus Faserverbundwerkstoff bei einer Mittenbefestigung formschlüssig mit einer Achse des Fahrzeuges zu verbinden, in dem sowohl an der Blattfeder wie auch an einer Auflagefläche der Achse korrespondierende Querrippen vorgesehen sind. Durch diese Einspannung ist die Blattfeder im Bereich der Einspannung in allen Richtungen fixiert.

Schließlich ist aus der EP 0 137 096 A2 eine elastische Lagerung von Blattfederenden bekannt geworden, bei denen im Endbereich der Blattfeder zwei halbschalenförmige Spannelemente vorgesehen sind, die durch Stifte miteinander verbunden sind. Die Halbschalen werden von einem entsprechenden ausgebildeten elastischen Lager aufgenommen. Eine andere Anwendung als für Blattfederenden ist nicht vorgesehen.

Der Erfindung liegt die Aufgabe zugrunde, eine gelagerte Querblattfeder für eine Radaufhängung eines Kraftfahrzeuges zu schaffen, die eine Bewegung im Fahrbetrieb in aufbauseitigen Lagerungen ohne große Widerstände ermöglicht und diese Lagerungen in einfacher Weise ausgebildet und montierbar sind.

Diese Aufgabe wird erfindungsgemäß durch die kennzeichnenden Merkmale der Ansprüche 1 und 2 gelöst. Weitere vorteilhafte Merkmale beinhalten die Unteransprüche.

Die mit der Erfindung hauptsächlich erzielten Vorteile bestehen darin, daß durch die beidseitige Lagerung der Blattfeder zwischen halbzylindrischen Spannelementen, welche über Lagerschalen in elastischen Aufnahmen gehalten sind, Federbewegungen ohne wesentliche Widerstände möglich sind. Auch hohe bis sehr hohe Kräfte und Momente können in allen Richtungen bei geringer Verformung aufgenommen werden. Längenunterschiede der Blattfeder zwischen den beiden Lagerungen beim Durchfedern (Nulldurchgang) sind weitestgehend ohne Klemmung möglich. Auch ist bei einer Kunststoffeder über die Lagerungen eine Befestigung an den Einspannstellen ohne eine Beschädigung der Kunststoffoberfläche gewährleistet. Die Spannelemente können entweder über korrespondierende Verzahnungsprofile mit der Blattfeder gegen ein Verrutschen gesichert sein oder die Spannelemente sind über Stifte auf der Blattfeder gehalten. Die Stifte werden hierbei in Bohrungen der Blattfeder befestigt und in angeformten Hülsen der Lagerschalen eingesteckt.

Die eine obenseitig der Blattfeder angeordnete Lagerschale überdeckt die Blattfeder bis zu den Lagerstellen und ist konvex bogenförmig ausgeführt, damit die sich im Fahrbetrieb wölbende Blattfeder einen entsprechenden Freiraum besitzt. Die Lagerschale kann als Blechschale ausgebildet sein oder aus einem Gußteil bestehen.

Die Lagerstellen für die Blattfeder können nach der Erfindung auch in einem Vorderachsträger vorgesehen sein, die dann von Lagerdeckeln abgeschlossen sind.

Die Lagerschalen für die halbzylindrischen Spannelemente und die umschließenden elastischen Aufnahmen sind entsprechend ausgerundet. Die elastischen Aufnahmen können auf die Spannelemente aufvulkanisiert sein. Auch eine gemeinsame Vulkanisation von Spannelement mit elastischer Aufnahme und Lagerschale ist möglich.

Die Lagerschalen werden zusammen über Befestigungsschrauben mit am Fahrzeugaufbau gehaltenen Konsolen verbunden.

Durch die Ausgestaltung der elastischen Aufnahmen und/oder der Innenform der Lagerschalen lassen sich die Kennungen des Lagers den Erfordernissen entsprechend abstimmen.

So kann beispielsweise über Taschen eine hohe Steifigkeit bei äußeren Seitenkräften und geringere Steifigkeiten bei innerem Längenausgleich (Nulldurchgang) erzielt werden.

In vorteilhafter Weise können die halbzylindrischen Spannelemente auch stirnseitig angeordnete und halbseitig wegragende Nasen besitzen, die beim Zusammenfügen der Spannelemente sich zu einer durchgehenden Fläche ergänzen. Zwischen diesen Nasen an den Stirnseiten der Spannelemente ist dann die Blattfeder gehalten bzw. geführt. Die elastischen Aufnahmen können zweigeteilt ausgeführt sein, wodurch eine schnelle und einfache Montage möglich wird, da diese elastischen Elemente dann von der Stirnseite her auf die Spannelemente aufsteckbar sind.

Die Querblattfeder kann zur zusätzlichen Abstützung von Kräften und zur exakten Radführung einen unter einem Winkel angestellten Lenker aufweisen. Dieser ist zum einen in der Nähe des Führungsgelenks angeordnet und kann zusammen mit diesem Führungsgelenk in einem Lagerkopf gelagert sein. Dieser Lagerkopf ist fest mit der Blattfeder verbunden.

Ausführungsbeispiele der Erfindung sind in der Zeichnung dargestellt und werden im folgenden näher beschrieben.

Es zeigen
- Fig. 1: eine Vorderansicht einer Querblattfeder mit Lagerungen,
- Fig. 2: eine Unteransicht zu Fig. 1 in Pfeilrichtung X gesehen,
- Fig. 3: eine Draufsicht zu Fig. 1 in Pfeilrichtung Z gesehen,
- Fig. 4: einen Schnitt nach der Linie IV-IV gemäß Fig. 3 ohne aufbauseitige Konsole,
- Fig. 5: eine schaubildliche Darstellung einer unterseitigen Lagerschale,
- Fig. 6: eine Vorderansicht einer weiteren Ausführung einer Lagerung für die Blattfeder,
- Fig. 7: eine Unteransicht zur Fig. 6 in Pfeilrichtung Y gesehen,
- Fig. 8: einen Schnitt durch die Lagerstelle nach der Linie VIII-VIII gemäß Fig. 7,

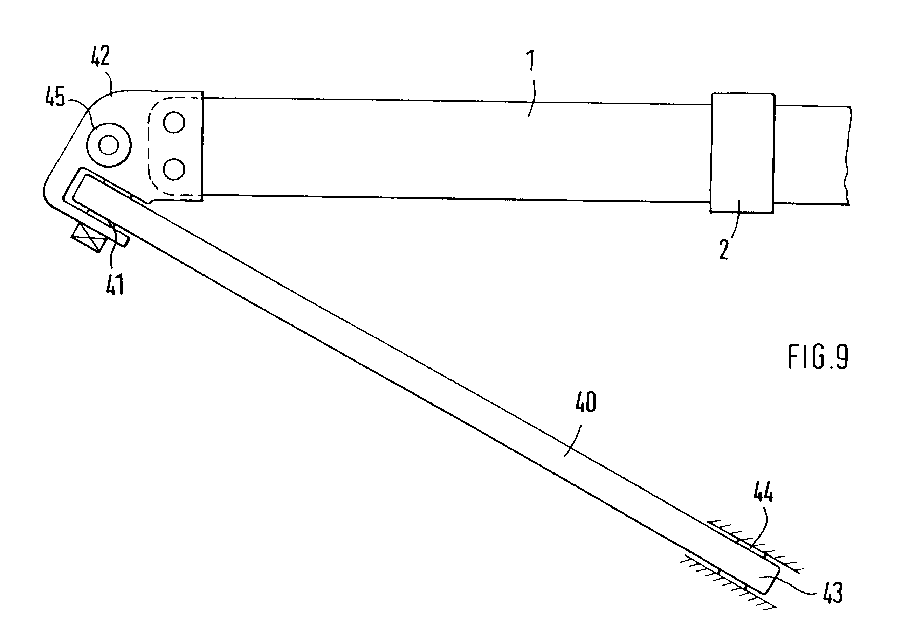

- Fig. 9: eine Ausführung der Querblattfeder mit einem verbundenen Lenkerarm,
- Fig. 10: eine weitere Ausführung einer Lagerung für die Blattfeder in schaubildlicher Darstellung mit Spannelementen, elastischen Aufnahmen und Lagerschale und
- Fig. 11: eine Darstellung der als Querträger ausgebildeten oberseitigen Lagerschale in Verbindung mit der unterseitigen Lagerschale.

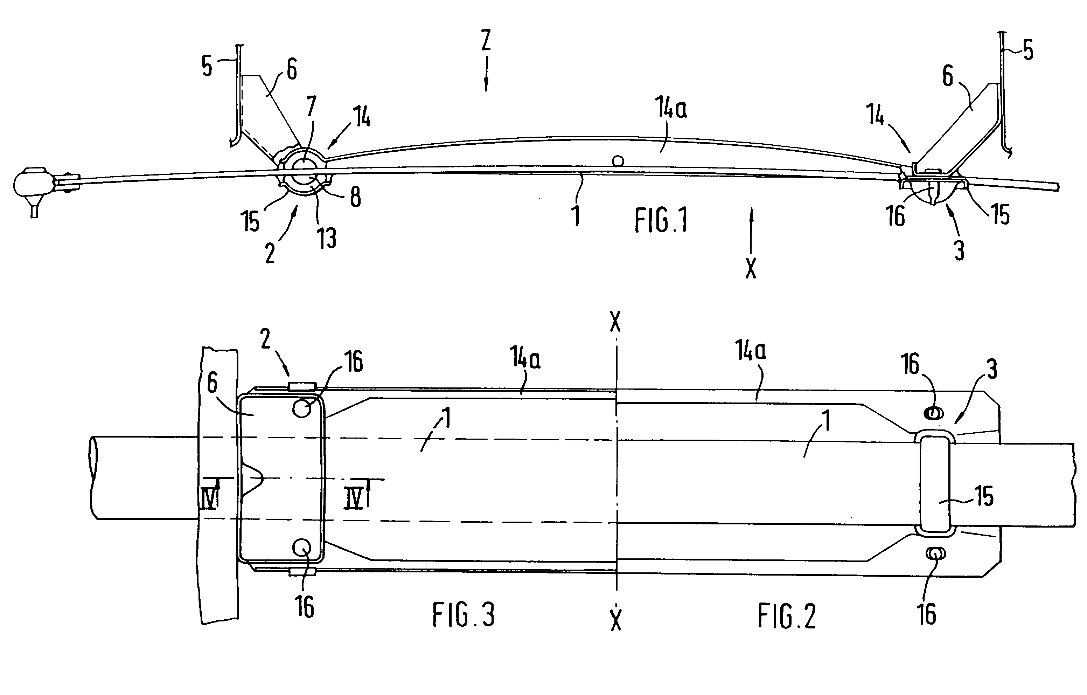

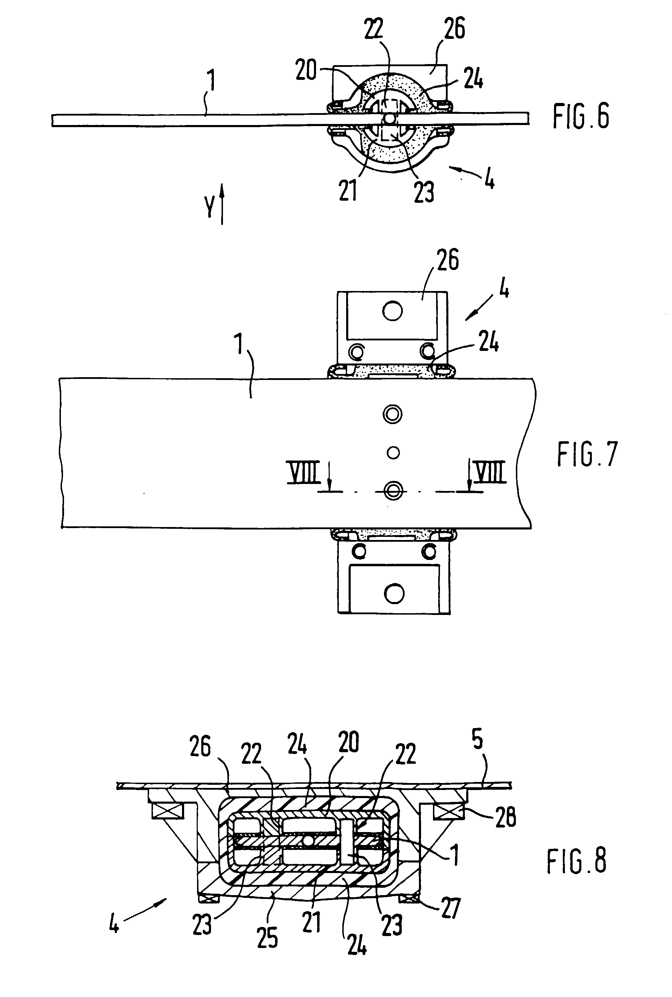

Eine nicht näher dargestellte Radaufhängung eines Kraftfahrzeuges umfaßt eine quer im Fahrzeug angeordnete Blattfeder 1, die beidseitig einer Fahrzeuglängsmittenebene X-X in Lagerungen 2, 3 (Fig. 1) und 4 (Fig. 7) zum Fahrzeugaufbau 5 hin abgestützt und mit diesem über eine Konsole 6 verbunden ist.

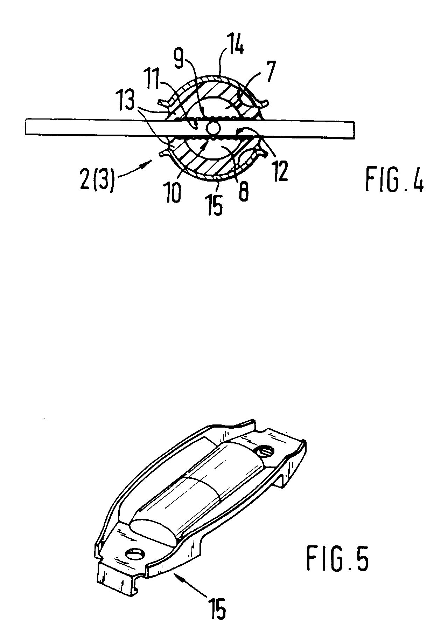

Die Lagerungen 2, 3 gemäß der Ausführung nach den Fig. 1 bis 5 bestehen jeweils aus zwei halbzylindrischen Spannelementen 7, 8, welche sich quer zur Blattfeder 1 erstrecken. Die Elemente 7, 8 spannen zwischen ebenen Flächenabschnitten 9, 10 die Blattfeder 1 ein. In diesen Flächenabschnitten 9, 10 der Elemente 7, 8 und/oder der Oberflächen der Blattfeder 1 sind miteinander korrespondierende Verzahnungsprofile 11, 12 vorgesehen, die ein Verrutschen der Blattfeder 1 in den Lagerstellen verhindern sollen.

Die Spannelemente 7, 8 sind von elastischen Aufnahmen 13 umschlossen, welche in Lagerschalen 14, 15 der Lagerungen 2, 3 gehalten sind. Die Lagerschalen 14, 15 sowie die elastischen Aufnahmen 13 sind entsprechend der halbzylindrischen Form der Spannelemente 7, 8 ausgebildet.

Die obenseitig der Blattfeder 1 angeordneten Lagerschalen 14 sind als Querträger 14a ausgeführt und weisen an ihren freien Enden eingeformte Lagerungen für die Spannelemente 7, 8 auf. Der Querträger ist konvex gewölbt und bildet zur Blattfeder 1 einen Freiraum.

Unterseitig der Blattfeder 1, gegenüberstehend der oberen Lagerungen 14 sind die aus einem länglichen Teil bestehenden Lagerschalen 15 angeordnet. Eine Befestigung der beiden gegenüberstehenden Lagerschalen 14, 15 an der Konsole 6 erfolgt über Schrauben 16.

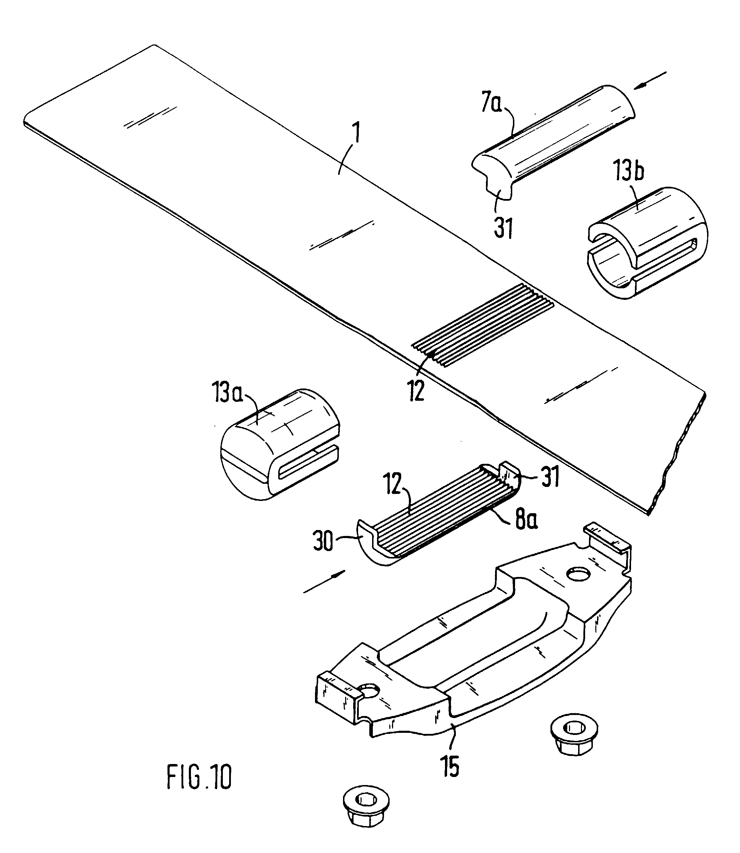

In Fig. 10 ist eine weitere Ausführung einer Lagerung 2, 3 für eine Blattfeder 1 dargestellt. Bei dieser Ausführung weisen die halbzylindrischen Spannelemente 7a, 8a jeweils stirnseitig wegragende, halbseitige Nasenteile 30, 31 auf. Im zusammengefügten Zustand der Spannelemente 7a, 8a ergänzen sich diese halbseitigen Nasen zu einer ganzen Nase, welche die Stirnseiten der Spannelemente flächig abschließen.

Zugleich wird über diese Nasen ein fester Halt auf der Blattfeder gewährleistet und die Blattfeder 1 darüberhinaus geführt.

Die elastischen Aufnahmen 13a, 13b für die Spannelemente 7a, 8a können zweiteilig ausgeführt sein und werden von der Stirnseite der Spannelemente 7a, 8a her in Pfeilrichtung auf diese aufgesteckt.

In den Fig. 6 bis 8 ist eine weitere Ausführung einer Lagerung 4 für eine Blattfeder 1 dargestellt. Es ist nur eine Lagerung 4 dargestellt. Die Lagerungen 4 sind entsprechend der Lagerungen 2, 3 der Ausführung gemäß Fig. 1 auf der Blattfeder angeordnet.

Die Spannelemente 20, 21 sind innenseitig mit angeformten Hülsen 22 versehen, die sich gegenüberstehen und die Blattfeder 10 zwischen sich einspannen. Über in der Blattfeder 1 gehaltene Stifte 23 sind die Hülsen 22 und somit die Spannelemente 20, 21 miteinander verbunden. Die umgebenden Lagerschalen 25, 26 weisen innenseitig jeweils eine elastische Aufnahme 24 auf, die die halbzylindrischen Spannelemente 20, 21 umgeben und welche über Schrauben 27 miteinander verbunden sind. Eine Befestigung am Fahrzeugaufbau erfolgt über weitere Schrauben 28. Die Spannelemente 20, 21 sind schalenförmig ausgeführt, wobei die Hülsen 22 in diesen Schalen freistehend vorragend sind.

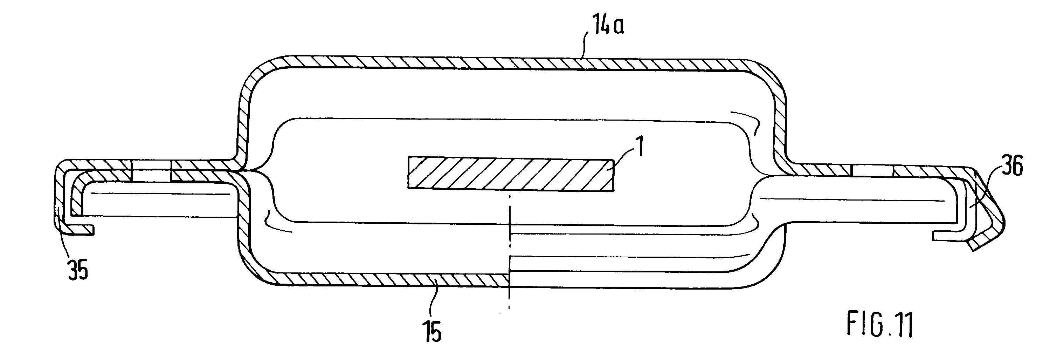

Fig. 11 ist der Querträger 14a mit den oberseitigen Lagerschalen 14 in Verbindung mit den unterseitigen Lagerschalen 15 gezeigt. Die Verbindung erfolgt über abgebogene Schenkel 35, 36 des Querträgers 14a, welche die Ränder der Lagerschalen 15 klemmend umgreifen.

Die Blattfeder 1 kann mit den Lagerungen 2, 3; 4 auch mit einem Lenkerarm 40 endseitig verbunden sein. Dieser ist über ein Lager 41 in einem Lagerkopf 42 angelenkt, welcher auch mit der Blattfeder 1 befestigt ist. Das freie Ende 43 des Lenkerarmes 40 ist über ein weiteres Lager 44 am Fahrzeugaufbau gehalten. Im Lagerkopf 42 ist ein Führungsgelenkt 45 angeordnet.

## Patentansprüche

1. Radaufhängung für ein Kraftfahrzeug mit einer radführenden und quer zum Fahrzeug angeordneten Blattfeder (1), insbesondere einer Blattfeder aus Kunststoff, die am Fahrzeugaufbau (5) gelagert und mit ihren freien Enden (43) am Radträger angelenkt ist, wobei die Blattfeder (1) beidseitig einer Fahrzeuglängsmittenebene (X-X) zwischen zwei quer zur Blattfeder (1) liegenden Spannelementen (7, 8; 7a, 8a; 20, 21) gehalten ist, welche über gegenüberstehende elastische Aufnahmen (13; 13a, 13b; 24) in umgebenden Lagerschalen (14, 15; 25, 26) angeordnet sind, **dadurch gekennzeichnet,** daß die halbzylindrischen Spannelemente (7, 8) mit ihren ebenen Flächenabschnitten (9, 10) die den Oberflächen der Blattfeder (1) zugerichtet sind und in diesen Abschnitten (9, 10) und/oder in der Blattfeder (1) zusammenwirkende Verzahnungsprofile (11, 12) angeordnet sind.

2. Radaufhängung für ein Kraftfahrzeug mit einer radführenden und quer zum Fahrzeug angeordneten Blattfeder (1), insbesondere einer Blattfeder aus Kunststoff, die am Fahrzeugaufbau (5) gelagert und mit ihren freien Enden (43) am Radträger angelenkt ist, wobei die Blattfeder (1) beidseitig einer Fahrzeuglängsmittenebene (X-X) zwischen zwei quer zur Blattfeder (1) liegenden Spannelementen (7, 8; 7a, 8a; 20, 21) gehalten ist, welche über gegenüberstehende elastische Aufnahmen (13; 13a, 13b; 24) in umgebenden Lagerschalen (14, 15; 25, 26) angeordnet sind, **dadurch gekennzeichnet,** daß die halbzylindrischen Spannelemente (20, 21) schalenförmig ausgeführt sind, die innenseitig mehrere gegenüberstehende Hülsen (22) aufweisen, zwischen denen die Blattfeder (1) eingespannt angeordnet ist und in denen mit der Blattfeder (1) verbundene Stifte (23) gehalten sind.

3. Radaufhängung nach Anspruch 2, **dadurch gekennzeichnet,** daß die Spannelemente (20, 21) in elastischen Aufnahmen (24) gehalten sind, welche von den über Schrauben (27) miteinander verbundenen Lagerschalen (25, 26) aufgenommen werden.

4. Radaufhängung nach Anspruch 1, 2 oder 3, **dadurch gekennzeichnet,** daß die obenseitig der Blattfeder (1) angeordneten ersten Lagerschalen (14) in einen Querträger (14a) angeordnet sind, welche ausgerundete Lagerungen für die in den elastischen Aufnahmen (13; 13a, 13b; 24) eingebetteten Spannelemente (7, 8; 7a, 8a; 20, 21) aufweisen.

5. Radaufhängung nach einem der Ansprüche 1 bis 4, **dadurch gekennzeichnet,** daß der Querträger (14a) eine konvexe bogenförmige Form zwischen den endseitig angeordneten Lagerschalen (14) besitzt und im Bereich dieser beiden Lagerschalen (14) jeweils mit einer aufbauseitig befestigbaren Konsole (6) sowie mit einer unterseitig der Blattfeder (1) angeordneten weiteren Lagerschale (15) verbindbar ist.

6. Radaufhängung nach einem der Ansprüche 1 bis 5, **dadurch gekennzeichnet,** daß die unterseitig angeordneten Lagerschalen (15) jeweils aus einem länglichen das halbzylindrische Spannelement (8) aufnehmenden Teil besteht, das über Schrauben (16) mit dem Querträger (14a) und der Konsole (6) verbindbar ist.

7. Radaufhängung nach einem der Ansprüche 1 bis 6, **dadurch gekennzeichnet,** daß die Spannelemente (20, 21) in elastischen Aufnahmen (24) gehalten sind, welche von den über Schrauben (27) miteinander verbundenen Lagerschalen (25, 26) aufgenommen werden.

8. Radaufhängung nach einem der Ansprüche 1 bis 7, **dadurch gekennzeichnet,** daß die halbzylindrischen Spannelemente (7a, 8a) die Blattfeder (1) von beiden Seiten randseitig mit jeweils einem wegragenden halbseitigen Nasenteil (30, 31) übergreifen und diese Nasenteile (30, 31) des Spannelements (7a, 8a) im verbundenen Zustand zu ganzen Nasen zusammenfügbar sind.

9. Radaufhängung nach einem der Ansprüche 1 bis 8, **dadurch gekennzeichnet,** daß die elastischen Aufnahmen (13a, 13b) zweiteilig ausgeführt sind und jede Aufnahme auf die Spannelemente (7, 8; 7a, 8a; 20, 21) von der Stirnseite her aufsteckbar ausgebildet sind.

10. Radaufhängung nach einem der Ansprüche 1 bis 9, **dadurch gekennzeichnet,** daß die als Querträger (14a) ausgebildete obenseitige Lagerschale (14) die weiteren unterseitigen Lagerschalen (15) randseitig mit Schenkel (35, 36) umgreift und klemmend hält.

11. Radaufhängung nach einem der Ansprüche 1 bis 10, **dadurch gekennzeichnet,** daß die Blattfeder (1) endseitig jeweils mit einem unter einem Winkel angestellten Zusatzlenker (40) verbunden ist, der über ein Lager (41) in einem Lagerkopf (42) gehalten und dieser mit dem Federende fest verbunden ist.

## Claims

1. A wheel suspension for a motor vehicle with a leaf spring (1) guiding the wheel and arranged transversely with respect to the vehicle, in particular a leaf spring of plastics material mounted on the vehicle body (5) and articulated by its free ends (43) to the wheel carrier, wherein the leaf spring (1) is held on both sides of a longitudinal median plane **(X-X)** of the vehicle between two clamping members (7, 8; 7a, 8a; 20, 21) situated transversely to the leaf spring (1) and arranged in surrounding bearing shells (14, 15; 25, 26) by way of mutually opposed resilient receiving means (13; 13a, 13b; 24), **characterized in that** the semi-cylindrical clamping members (7, 8) with their flat surface portions (9, 10) face the surfaces of the leaf spring (1) and cooperating toothing profiles (11, 12) are arranged in the said portions (9, 10) and/or in the leaf spring (1).

2. A wheel suspension for a motor vehicle with a leaf spring (I) guiding the wheel and arranged transversely with respect to the vehicle, in particular a leaf spring of plastics material mounted on the vehicle body (5) and articulated by its free ends (43) to the wheel carrier, wherein the leaf spring (1) is held on both sides of a longitudinal median plane **(X-X)** of the vehicle between two clamping members (7, 8; 7a, 8a; 20, 21) situated transversely to the leaf spring (1) and arranged in surrounding bearing shells (14, 15; 25, 26) by way of mutually opposed resilient receiving means (13; 13a, 13b; 24), **characterized in that** the semi-cylindrical clamping members (20, 21) are shell-shaped and are provided on the inside with a plurality of mutually opposed sleeves (22) between which the leaf spring (1) is clamped and in which pins (23) connected to the leaf spring (1) are held.

3. A wheel suspension according to Claim 2, **characterized in that** the clamping members (20, 21) are held in resilient receiving means (24) received by the bearing shells (25, 26) connected to one another by way of bolts (27).

4. A wheel suspension according to Claim 1, 2 or 3, **characterized in that** the first bearing shells (14) arranged on the top of the leaf spring (1) are arranged in a transverse support (14a), the first bearing shells (14) comprising rounded bearings for the clamping members (7, 8; 7a, 8a; 20, 21) embedded in the resilient receiving means (13; 13a, 13b; 24).

5. A wheel suspension according to one of Claims 1 to 4, **characterized in that** the transverse support (14a) has a convex arcuate shape between the bearing shells (14) situated at the ends and can be connected in the region of the said two bearing shells (14), respectively, to a bracket (6) securable on the body and to a further bearing shell (15) arranged on the underside of the leaf spring (1) respectively.

6. A wheel suspension according to one of Claims 1 to 5, **characterized in that** the bearing shells (15) arranged on the underside each comprise a respective elongate part receiving the semi-cylindrical clamping member (8) and connectable to the transverse support (14a) and the bracket (6) by way of bolts (16).

7. A wheel suspension according to one of Claims 1 to 6, **characterized in that** the clamping members (20, 21) are held in resilient receiving means (24) received by bearing shells (25, 26) connected to one another by way of bolts (27).

8. A wheel suspension according to one of Claims 1 to 7, **characterized in that** the semi-cylindrical clamping members (7a, 8a) engage over the leaf spring (1) on the edge from both sides with a respective projection part (30, 31) extending on half the side, and the said projection parts (30, 31) of the clamping member (7a, 8a) can be assembled to form complete projections in the connected state.

9. A wheel suspension according to one of Claims 1 to 8, **characterized in that** the resilient receiving means (13a, 13b) are constructed in two parts and each receiving means is constructed in such a way that it can be mounted on the clamping members (7, 8; 7a, 8a; 20, 21) from the front end.

10. A wheel suspension according to one of Claims 1 to 9, **characterized in that** the top bearing shell (14) constructed in the form of a transverse support (14a) engages with arms (35, 36) around the edge of the further bottom bearing shells (15) and holds them in a clamping manner.

11. A wheel suspension according to one of Claims 1 to 10, **characterized in that** the leaf spring (1) is connected at the ends to a respective additional control arm (40) set at an angle and held in a bearing head (42) by way of a bearing (41), and the said bearing head (42) is securely connected to the end of the spring.

## Revendications

1. Suspension de roue pour un véhicule automobile avec un ressort à lame (1) qui guide la roue et qui est disposé transversalement au véhicule, notamment un ressort à lame en matière plastique, qui est monté sur la carrosserie (5) du véhicule et qui est articulé au support de roue par ses extrémités libres (43), le ressort à lame (1) étant maintenu des deux côtés d'un plan médian longitudinal (X-X) du véhicule entre deux éléments de serrage (7, 8 ; 7a, 8a ; 20, 21) qui s'étendent transversalement au ressort à lame (1), ces éléments de serrage étant disposés, par des logements élastiques (13 ; 13a, 13b ; 24) se faisant face, dans des coquilles de coussinets (14, 15 ; 25, 26) qui les entourent, caractérisée en ce que les éléments de serrage (7, 8) semi-cylindriques sont orientés, par leurs segments de surface (9, 10) plans vers les surfaces du ressort à lame (1) et en ce que dans ces segments (9, 10) et/ou dans le ressort à lame (1) sont disposés des profilés dentés (11, 12) coopérant entre eux.

2. Suspension de roue pour un véhicule automobile avec un ressort à lame (1) qui guide la roue et qui est disposé transversalement au véhicule, notamment un ressort à lame en matière plastique, qui est monté sur la carrosserie (5) du véhicule et qui est articulé au support de roue par ses extrémités libres (43), le ressort à lame (1) étant maintenu des deux côtés d'un plan médian longitudinal (X-X) du véhicule entre deux éléments de serrage (7, 8 ; 7a, 8a ; 20, 21) qui s'étendent transversalement au ressort à lame (1), ces éléments de serrage étant disposés, par des logements élastiques (13 ; 13a, 13b ; 24) se faisant face, dans des coquilles de coussinets (14, 15 ; 25, 26) qui les entourent, caractérisée en ce que les éléments de serrage (20, 21) semi-cylindriques sont en forme de coquilles qui présentent sur le côté intérieur plusieurs manchons (22) se faisant face et entre lesquels est serré le ressort à lame (1) et dans lesquels sont maintenues des chevilles (23) reliées au ressort à lame (1).

3. Suspension de roue selon la revendication 2, caractérisée en ce que les éléments de serrage (20, 21) sont maintenus dans des logements élastiques (24) qui sont reçus par des coquilles de coussinets (25, 26) reliées entre elles par des vis (27).

4. Suspension de roue selon la revendication 1, 2 ou 3, caractérisée en ce que les premières coquilles de coussinets (14), disposées sur le côté supérieur du ressort à lame (1), sont disposées dans une traverse (14a) qui présente des supports arrondis pour les éléments de serrage (7, 8 ; 7a, 8a ; 20, 21) noyés dans les logements élastiques (13 ; 13a, 13b ; 24).

5. Suspension de roue selon l'une des revendications 1 à 4, caractérisée en ce que la traverse (14a) présente une forme convexe en arc entre les coquilles de coussinets (14) disposées aux extrémités et peut être reliée, dans la zone de ces deux coquilles de coussinets (14), à une console (6) à fixer à la carrosserie ainsi qu'à une autre coquille de coussinet (15), disposée sur le côté inférieure du ressort à lame (1).

6. Suspension de roue selon l'une des revendications 1 à 5, caractérisée en ce que les coquilles de coussinet (15) disposées sur le côté inférieur sont constituées chacune d'un élément oblong recevant l'élément de serrage (8) semi-cylindrique, lequel élément peut être relié par des vis (16) à la traverse (14a) et à la console (6).

7. Suspension de roue selon l'une des revendications 1 à 6, caractérisée en ce que les éléments de serrage (20, 21) sont maintenus dans des logements élastiques (24) qui sont reçus par les coquilles de coussinets (25, 26) reliées entre elles par des vis (27).

8. Suspension de roue selon l'une des revendications 1 à 7, caractérisée en ce que les éléments des serrage (7a, 8a) semi-cylindriques passent sur le ressort à lame (1) des deux côtés, sur les bords, dans chaque cas par une partie d'ergot (30, 13) saillante de demi-côté, et ces parties d'ergot (30, 31) de l'élément de serrage (7a, 8a) peuvent être assemblées en ergots complets, à l'état relié.

9. Suspension de roue selon l'une des revendications 1 à 8, caractérisée en ce que les logements élastiques (13a, 13b) sont réalisés en deux parties et chaque logement peut être enfilé à partir du côté frontal sur les éléments de serrage (7 ; 7a, 8a ; 20, 21).

10. Suspension de roue selon l'une des revendications 1 à 9, caractérisée en ce que la coquille de coussinet (14) du côté supérieur, réalisée en tant que traverse (14a), entoure les autres coquilles de coussinets (15) du côté inférieur, sur les bords, par des côtés (35, 36).

11. Suspension de roue selon l'une des revendications 1 à 10, caractérisée en ce que le ressort à lame (1) est à chacune de ses extrémités relié à un bras oscillant supplémentaire (40), incliné sous un angle, qui est maintenu, par un palier (41), dans une tête de palier (42) et cette dernière est reliée fixement à l'extrémité du ressort.
